# EUROPEAN PATENT APPLICATION

(11) **EP 1 981 270 A2**
(43) Date of publication of application: **15.10.2008**
(21) Application number: 08002528.1
(22) Date of filing: 12.02.2008
(51) Int. Cl.: H04N 5/455

(54) **Broadcast receiving apparatus and method for receiving broadcast signal**

(30) Priority: 10.04.2007 JP 2007103155
(71) Applicant: KABUSHIKI KAISHA TOSHIBA, Tokyo (JP)
(72) Inventor: Takashima, Tadao, Tokyo (JP)
(74) Representative: HOFFMANN EITLE

(57) **Abstract**

A broadcast receiving apparatus includes: an input unit to which a high frequency signal is input; a conversion unit that converts the high frequency signal into a digital intermediate frequency signal; a differential output unit that differentially outputs the digital intermediate signal converted by the conversion unit; a demodulation unit that demodulates the digital intermediate frequency signal that is differentially output from the differential output unit; and a resonance unit that includes a coil and a capacitor that are serially connected with each other between the differential output unit and the demodulation unit, the resonance unit being configured to pass the digital intermediate frequency signal while attenuating out-of-band component of the digital intermediate frequency signal.

## Description

### CROSS-REFERENCE TO RELATED APPLICATIONS

This application is based upon and claims the benefit of priority from Japanese Patent Application No. 2007-103155, filed on April 10, 2007, the entire content of which are incorporated herein by reference.

### BACKGROUND

### 1. Field

One embodiment of the invention relates to an apparatus, such as a digital television broadcast receiver, and a method for receiving broadcast signals while reducing noise component of the broadcast signals flowing into a tuner unit.

### 2. Description of the Related Art

Recently, television broadcast has been digitized as is known publicly. For example, in Japan, terrestrial digital broadcast services as well as satellite digital broadcast such as BS (broadcasting satellite) digital broadcast and 110 degree CS (communication satellite) digital broadcast have been provided.

In digital broadcast receiving apparatuses for receiving digital television broadcast, RF (radio frequency) signals that are received by an antenna and subjected to frequency conversion are converted by a digital tuner into intermediate frequency signals of a predetermined frequency, and then the converted intermediate frequency signals are supplied to a digital demodulation unit to obtain TS (transport stream).

However, the digital demodulation unit is configured to operate based on operation clock of a predetermined frequency output from a clock generating unit. For this reason, harmonic component of the operation clocks used in the digital demodulation unit flows into a tuner unit through a transmission path of the intermediate frequency signals to the digital demodulation unit.

In this case, when frequency component close to the frequency of the RF signals exist in the harmonic component flowing into the tuner unit, C/N (carrier to noise ratio) is deteriorated due to a beat frequency caused by a difference between these frequencies, and thus a bit error may easily occur. That is, the so-call digital clock harmonic spurious interference occurs.

In JP-A-08-223064, there is disclosed a configuration in which a tank circuit is connected in parallel with a pair of differential paths that are connected between a differential outputting frequency converter for converting the input high frequency signals in frequency by an output of an oscillator and an intermediate frequency amplifier for amplifying the differential output of the frequency converter, thereby removing unnecessary components other than the intermediate frequency signals.

### SUMMARY

One of objects of the present invention is to provide a broadcast receiving apparatus and a method for receiving broadcast signal that are capable of reducing interference against a intermediate frequency signal by attenuating out-of-band noise components flowing from a digital demodulation unit into a tuner unit without attenuating the intermediate frequency signal supplied from the tuner unit to the digital demodulation unit.

According to a first aspect of the present invention, there is provided a broadcast receiving apparatus including: an input unit to which a high frequency signal is input; a conversion unit that converts the high frequency signal into a digital intermediate frequency signal; a differential output unit that differentially outputs the digital intermediate signal converted by the conversion unit; a demodulation unit that demodulates the digital intermediate frequency signal that is differentially output from the differential output unit; and a resonance unit that includes a coil and a capacitor that are serially connected with each other between the differential output unit and the demodulation unit, the resonance unit being configured to pass the digital intermediate frequency signal while attenuating out-of-band component of the digital intermediate frequency signal.

According to a second aspect of the present invention, there is provided a broadcast receiving apparatus including: a receiver unit that receives a broadcast signal to obtain a high frequency signal; a conversion unit that converts the high frequency signal into a digital intermediate frequency signal; a differential output unit that differentially outputs the digital intermediate signal converted by the conversion unit; a demodulation unit that demodulates the digital intermediate frequency signal that is differentially output from the differential output unit; a resonance unit that includes a coil and a capacitor that are serially connected with each other between the differential output unit and the demodulation unit, the resonance unit being configured to pass the digital intermediate frequency signal while attenuating out-of-band component of the digital intermediate frequency signal; and an output unit that outputs the digital data demodulated by the demodulation unit to an external device.

According to a third aspect of the present invention, there is provided a method for receiving a broadcast signal, the method including: converting a high frequency signal into a digital intermediate frequency signal; differentially outputting the digital intermediate signal; and supplying the digital intermediate signal that is differentially output to a digital demodulator after passing the digital intermediate frequency signal through a resonance circuit while attenuating out-of-band component of the digital intermediate frequency signal.

### BRIEF DESCRIPTION OF THE SEVERAL VIEWS OF THE DRAWINGS

A general architecture that implements the various feature of the invention will now be described with reference to the drawings. The drawings and the associated descriptions are provided to illustrate embodiments of the invention and not to limit the scope of the invention.

Fig. 1 is a block diagram schematically illustrating a television broadcast receiving apparatus according to an embodiment of the present invention.

Fig. 2 is a block diagram specifically illustrating a digital/analog common tuner and a digital demodulation unit according to the embodiment.

Fig. 3 is a block circuit diagram illustrating a series resonance circuit connected and interposed between the tuner unit and the digital demodulation unit according to the embodiment.

Fig. 4 is a characteristic diagram illustrating frequency characteristics of the series resonance circuit according to the embodiment.

### DETAILED DESCRIPTION

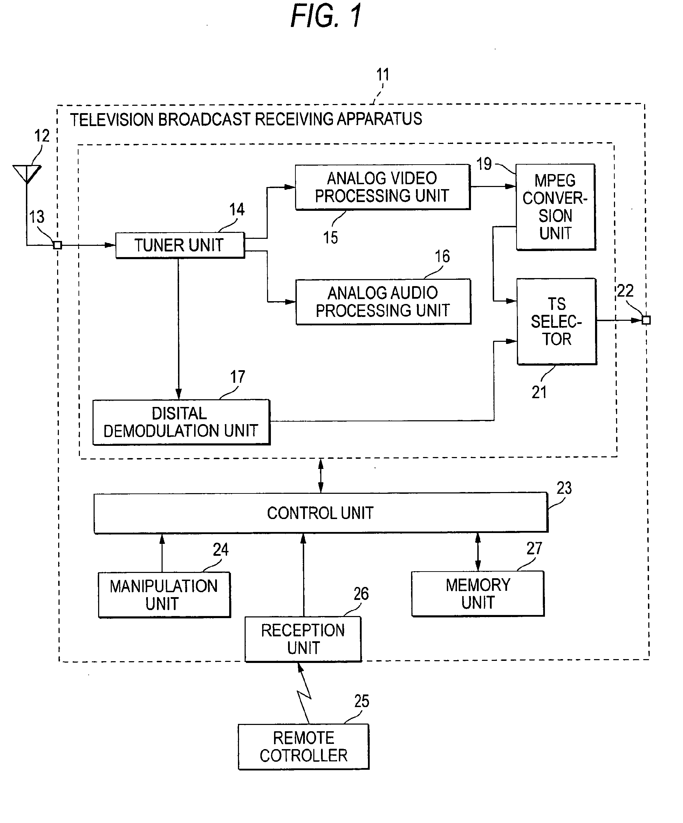

Hereinafter, an embodiment of the invention will be described in detail with reference to the drawings. Fig. 1 schematically shows a television broadcast receiving apparatus 11 described as the embodiment. RF signals received by an antenna 12 and converted in frequency are supplied to a tuner unit 14 through an input terminal 13.

The tuner unit 14 is configured as a digital/analog common tuner. When analog television broadcast is received, the input RF signals are converted into analog intermediate frequency signals and the converted signals are demodulated, and thus analog video components and analog audio components are generated and output. The analog video components output from the tuner unit 14 are supplied to an analog video processing unit 15 and then the analog video processing unit 15 performs a video process on the supplied analog video components. The processed components are supplied to a TS selector 21 by an MPEG conversion unit 19 as digital signals. The analog audio components output from the tuner unit 14 are supplied to an analog audio processing unit 16 and then the analog audio processing unit 16 performs an audio process on the analog audio components.

Meanwhile, when digital television broadcast signal is received, the tuner unit 14 converts the input RF signals into digital intermediate frequency signals and outputs the converted signals to a digital demodulation unit 17. The digital demodulation unit 17 performs a digital demodulating process on the input digital intermediate frequency signals and thus generates TS.

The TS generated by the digital demodulation unit 17 is supplied to the TS selector 21. The TS output from the MPEG conversion unit 19 and the digital demodulation unit 17 is selectively taken out by the TS selector 21 and is transmitted to an external video display unit (not shown) through a TS output terminal 22.

In the television broadcast receiving apparatus 11, all operations including the above-described reception operations are generally controlled by a control unit 23. The control unit 23 has a CPU (central processing unit) or the like therein. The control unit 23 receives manipulation information received from a manipulation unit 24 or manipulation information received from a remote controller 25 through a reception unit 26 so as to control each unit on the basis of the manipulation information.

In this case the control unit 23 uses a memory unit 27. That is, the memory unit 27 includes a ROM (read only memory) for storing a control program executed by the CPU of the control unit 23, a RAM (random access memory) for providing a work area to the CPU, and a nonvolatile memory for various setting information and control information.

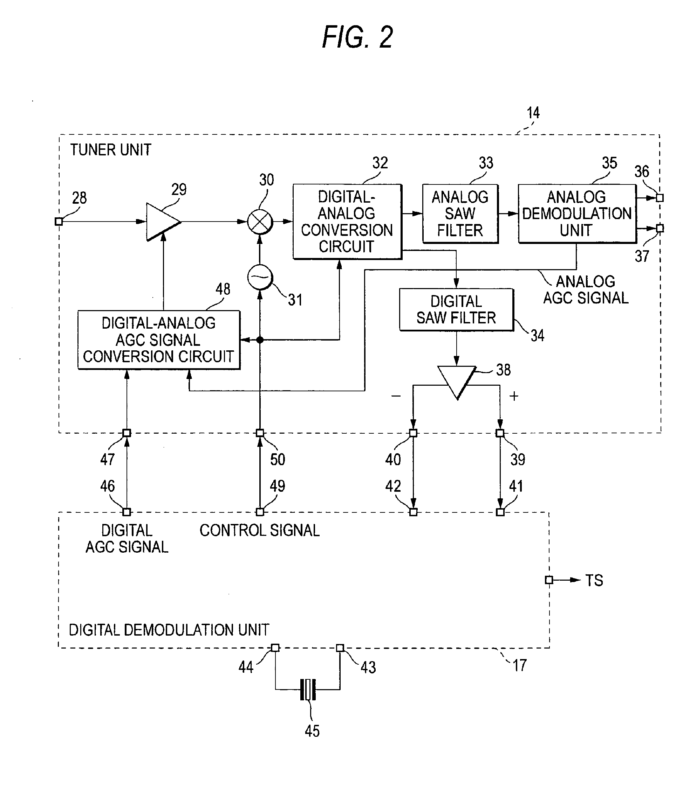

Fig. 2 shows detailed examples of the tuner unit 14 and the digital demodulation unit 17. In the tuner unit 14, the RF signals supplied to the input terminal 28 are amplified by a variable gain amplifier 29 and then are supplied to a mixing unit 30. The mixing unit 30 mixes the input RF signals with a local oscillation signals output from a local oscillator 31 to convert the mixed signals into an intermediate frequency signals.

The intermediate frequency signals output from the mixing unit 30 are supplied to an analog conversion circuit 32. At the time of receiving analog television broadcast, the digital-analog conversion circuit 32 transmits the analog intermediate frequency signals supplied from the mixing unit 30, to an analog SAW (surface acoustic wave) filer 33. At the time of receiving digital television broadcast, the digital-analog conversion circuit 32 transmits the digital intermediate frequency signals supplied from the mixing unit 30, to a distal SAW filter 34.

The analog intermediate frequency signals passing through the analog SAW filter 33 are supplied to an analog demodulation unit 35 and are provided to produce analog video components and analog audio components. The analog video components are supplied to the analog video processing unit 15 through an output terminal 36, and the analog audio components sis supplied to the analog audio processing unit 16 through an output terminal 37.

The digital intermediate frequency signals passing through the digital SAW filter 34 are supplied to a differential output amplifier 38 and are converted into a form of differential output. One (positive (+) side) output signals and the other (negative (-) side) output signals of the differential output amplifier 38 are output to the tuner unit 14 through digital output terminals 39 and 40, respectively.

The intermediate frequency signals differentially output through the digital output terminals 39 and 40 of the tuner 14 is input to digital input terminals 41 and 42 of the digital demodulation unit 17. The digital demodulation unit 17 demodulates the digital intermediate frequency signals input to the digital input terminals 41 and 42 to produce the Ts by the use of a predetermined frequency operation clock generated by a crystal oscillator 45 connected to connection terminals 43 and 44, and then the digital demodulation unit 17 outputs the TS.

The digital demodulation unit 17 generates a digital AGC (automatic gain control) signals. The digital AGC signals are output to the tuner unit 14 through an output terminal 46. That is, the digital AGC signals are supplied to a digital-analog AGC signal conversion circuit 48 through an input terminal 47 of the tuner unit 14.

The digital-analog AGC signal conversion circuit 48 transmits the digital AGC signals supplied from the digital demodulation unit 17, to the variable gain amplifier 29 at the time of receiving the digital television broadcast. Accordingly, at the time of receiving the digital television broadcast, the variable gain amplifier 29 is controlled in gain on the basis of the digital AGC signals.

The digital-analog AGC signal conversion circuit 48 transmits the analog AGC signals supplied from the analog demodulation unit 35, to the variable gain amplifier 29 at the time of receiving the analog television broadcast. Accordingly, at the time of receiving the analog television broadcast, the variable gain amplifier 29 is controlled in gain on the basis of the analog AGC signals.

The digital demodulation unit 17 generates various control signals. The control signals are output to the tuner unit 14 through an output terminal 49. That is, the control signals are supplied through an input terminal 50 of the tuner unit 14 to the local oscillator 31, the digital-analog conversion circuit 32, the digital-analog AGC signal conversion circuit 48, or the like so that the control signals are provided to control them.

In the configuration of the tuner unit 14 and the digital demodulation unit 17, the operation thereof will be described, for example, in a case where 10-channel signals (video carrier frequency is 205.25 MHz) of the analog television broadcast is received. The oscillation frequency of the crystal oscillator 45 connected to the digital demodulation unit 17 is configured as 25.67 MHz.

The RF signals supplied to the input terminal 28 are amplified by the variable gain amplifier 29, the amplified signals are mixed by the mixing unit 30 with the local oscillation signals (264.00 MHz) output from the local oscillator 31, and then the mixed signals are converted into the analog intermediate frequency signals (58.75 MHz). Then, the analog intermediate frequency signals are supplied to the analog demodulation unit 35 through the digital-analog conversion circuit 32 and the analog SAW filter 33, and thus the analog video components and the analog audio components are generated.

In this case, harmonic components (205.36 MHz) that are eight times the oscillation frequency (25.67 MHz) of the crystal oscillator 45 connected to the digital demodulation unit 17 flows into the tuner 14 through a path for transmitting the digital intermediate frequency signals to the digital demodulation unit 17, that is, from the digital input terminals 41 and 42 to the digital output terminals 39 and 40. Then, spurious image interference occurs on the analog video components due to a bit of a frequency difference (video carrier frequency is 205.25 MHz) from the 10-channel signals (0.11 MHz) of the analog television broadcast.

In a case where a 10-channel (digital center frequency: 204 + (1/7) MHz) signals of the digital television broadcast are received, the RF signals input to the input terminal 28 is amplified by the variable gain amplifier 29, the amplified signals are mixed with the local oscillation signals (264 + (1/7) MHz) output from the local oscillator 31, and then the mixed signals are converted into the digital intermediate frequency signals (60±3 MHz).

The digital intermediate frequency signals are supplied to the digital demodulation unit 17 through the digital-analog conversion circuit 32, the digital SAW filter 34, and the differential output amplifier 38, and thus the TS is generated.

Also, when the harmonic components (205.36 MHz) that are eight times the oscillation frequency (25.67 MHz) of the crystal oscillator 45 connected to the digital demodulation unit 17 flows into the tuner 14, a C/N to the digital intermediate frequency signals is deteriorated due to a bit of a frequency difference (1.217 MHz) from the 10-channel (digital center frequency: 204 + (1/7) MHz) signals of the digital television broadcast, and thus a bit error may easily occur.

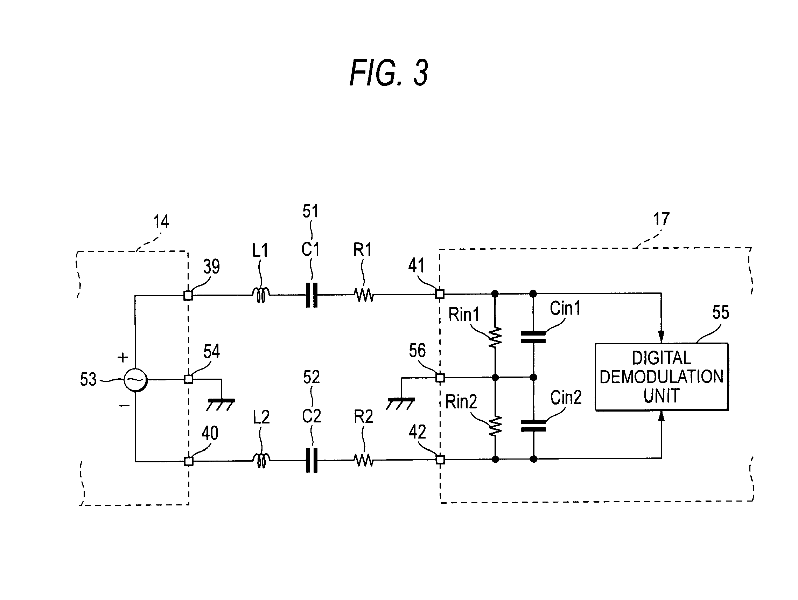

In the embodiment, as shown in Fig. 3, a series resonance circuit 51 including a coil L1, a capacitor C1, and a resistor R1 that are serially connected is connected and interposed between the digital output terminal 39 on one side (+ side) for the digital intermediate frequency signals differentially output from the tuner unit 14 and the digital input terminal 41 of the digital demodulation unit 17 for inputting the digital intermediate frequency signals.

In addition, a series resonance circuit 52 including a coil L2, a capacitor C2, and a resistor R2 that are serially connected is connected and interposed between the digital output terminal 40 on the other side (- side) for the digital intermediate frequency signals differentially output from the tuner unit 14 and the digital input terminal 42 of the digital demodulation unit 17 for inputting the digital intermediate frequency signals.

In Fig. 3, an inside of the tuner unit 14 is equivalently shown as an intermediate frequency signal generating unit 53 for differentially outputting the digital intermediate frequency signals, and further a ground terminal 54 is shown. In Fig. 3, an inside of the digital demodulation unit 17 is equivalently shown as a digital demodulation circuit 55 for generating the TS by demodulating the digital intermediate frequency signals supplied to the digital input terminals 41 and 42, and further a ground terminal 56 is shown. An input resistance Rin1 and an input capacitance Cin1 are connected in parallel between the digital input terminal 41 and the ground terminal 54, and an input resistance Rin2 and an input capacitance Cin2 are connected in parallel between the digital input terminal 42 and the ground terminal 54.

The series resonance circuits 51 and 52 are configured to have characteristics for enabling the resonance frequency to sufficiently and stably ensure the level of the digital intermediate frequency signals (60±3 MHz (57 to 63 MHz)), that is, characteristics for enabling the digital intermediate frequency signals to pass without attenuation. The series resonance circuit 51 and 52 are configured to have characteristics for serving as a high attenuation filter of 200 to 500 MHz at a high-frequency half-resonance point of the digital intermediate frequency signals, that is, characteristics for enabling the harmonic components that are eight times (205.36 MHz) the oscillation frequency (25.67 MHz) of the crystal oscillator 45 to be sufficiently attenuated.

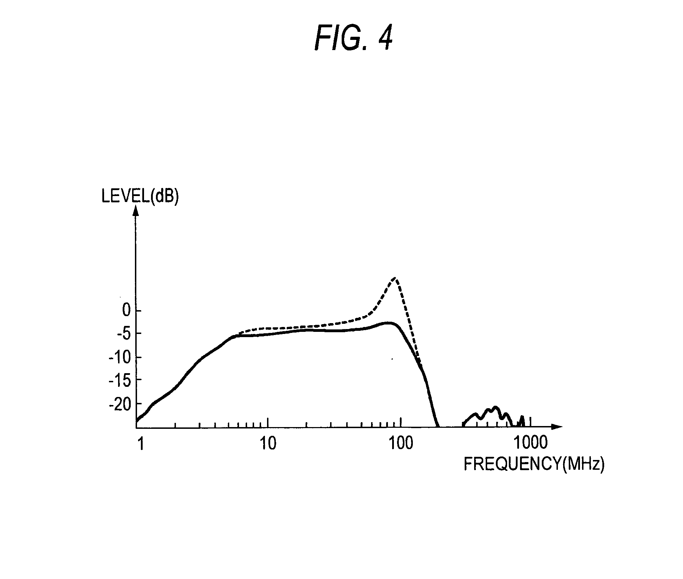

Fig. 4 shows an example of frequency characteristics of the series resonance circuits 51 and 52. In the present example, frequency characteristics are shown in a case where the input resistances Rin1 and Rin2 are sufficiently large as much as the input resistances Rin1 and Rin2 are negligible; the input capacitances Cin1 = Cin2 = 7 pF; the coils L1 = L2 = 0.39 µH; the capacitors C1 = C2 = 22 pF; and resistors R1 and R2 are set in the range of 33 to 330 Ω.

As appreciated from the frequency characteristics shown in Fig. 4, the digital intermediate frequency signals (60±3 MHz (57 to 63 MHz)) can pass without attenuation. In addition, since the signals are greatly attenuated at the half-resonance point in the vicinity of 200 MHz, unnecessary spurious components can be attenuated in the band of 200 to 500 MHz.

That is, the digital intermediate frequency signals supplied from the tuner unit 14 to the digital demodulation unit 17 are little attenuated, the harmonic components flowing from the digital demodulation unit 17 into the tuner unit 14 are attenuated, and thus it is possible to reduce interference against the analog signals or the digital intermediate frequency signals.

In Fig. 4, a dotted line indicates frequency characteristics in a case where the resistors R1 and R2 are set as 33 Ω, and a solid line indicates frequency characteristics in a case where the resistor R1 and R2 are set as 330 Ω. It is possible to select a level in lower pass frequency of the digital intermediate frequency signals by appropriately setting the values of the resistors R1 and R2.

However, when the resonance frequencies of the series resonance circuits 51 and 52 is set, the input capacitances Cin1 and Cin2 need to be considered. As for the series resonance circuit 51, the resonance frequency is determined on the basis of the coil L1, the capacitor C1, and the input capacitance Cin1. As for the series resonance circuit 52, the resonance frequency is determined on the basis of the coil L2, the capacitor C2, and the input capacitance Cin2. For this reason, the capacitances of the capacitors C1 and C2 need to be set in consideration of the input capacitances Cin1 and Cin2.

Meanwhile, since the series resonance circuits 51 and 52 are connected and interposed between the digital output terminals 39 and 40 of the tuner unit 14 and the digital input terminals 41 and 42 of the digital demodulation unit 17, it is possible to prevent noises from being transmitted from the digital demodulation unit 17 to the tuner unit 14.

The values of the coils L1 and L2, the capacitors C1 and C2, and the resistors R1 and R2 are examples. The values may be appropriately set as values for achieving the object as necessary, for example, the values of input capacitance Cin1 and Cin2 or a necessary pass band.

The digital AGC signals or the control signals in addition to the digital intermediate frequency signals are transmitted between the tuner unit 14 and the digital demodulation unit 17. The digital AGC signals are direct currents and the control signals are lower frequency signals equal to or lower than 1 MHz. Accordingly, it is possible to set the large amount of attenuation of clock harmonic spurious in the television broadcast signal band by the use of resistors, beads, capacitors, or the like, and thus there is no problem.

As described with reference to the embodiment, there is provided broadcast receiving apparatus that attenuates the out-of-band noise components flowing from the digital demodulation unit into the tuner without attenuating the intermediate frequency signal supplied from the tuner to the digital demodulation unit. Consequently, it is possible to reduce the interference against the intermediate frequency signal.

The present invention is not limited to the embodiment described above, but the invention may be embodied in practice by modifying constituent components without departing the scope of the claimed invention. Various kinds of inventions may be realized by proper combination of the plurality of constituent components disclosed in the embodiment described above. For example, some constituent components may be eliminated from all the components shown in the above embodiments. Moreover, constituent components in different embodiments may be appropriately combined.

## Claims

1. A broadcast receiving apparatus comprising:
an input unit to which a high frequency signal is input;
a conversion unit that converts the high frequency signal into a digital intermediate frequency signal;
a differential output unit that differentially outputs the digital intermediate signal converted by the conversion unit;
a demodulation unit that demodulates the digital intermediate frequency signal that is differentially output from the differential output unit; and
a resonance unit that includes a coil and a capacitor that are serially connected with each other between the differential output unit and the demodulation unit, the resonance unit being configured to pass the digital intermediate frequency signal while attenuating out-of-band component of the digital intermediate frequency signal.

2. The apparatus according to claim 1, wherein the resonance unit includes:
a first resonance circuit that includes a first coil and a first capacitor that are serially connected with each other on a first signal line of a pair of signal lines for transmitting the digital intermediate frequency signal that is differentially output from the differential output unit to the demodulation unit; and
a second resonance circuit that includes a second coil and a second capacitor that are serially connected with each other on a second signal line of the pair of signal lines.

3. The apparatus according to claim 1, wherein the resonance unit is configured such that a capacitance of the capacitor is set in consideration of an input capacitance provided on an input terminal of the demodulation unit.

4. The apparatus according to claim 1, wherein the resonance unit further includes a resistor that adjusts a passing band level, the resistor being serially connected to the coil and the capacitor.

5. A broadcast receiving apparatus comprising:
a receiver unit that receives a broadcast signal to obtain a high frequency signal;
a conversion unit that converts the high frequency signal into a digital intermediate frequency signal;
a differential output unit that differentially outputs the digital intermediate signal converted by the conversion unit;
a demodulation unit that demodulates the digital intermediate frequency signal that is differentially output from the differential output unit;
a resonance unit that includes a coil and a capacitor that are serially connected with each other between the differential output unit and the demodulation unit, the resonance unit being configured to pass the digital intermediate frequency signal while attenuating out-of-band component of the digital intermediate frequency signal; and
an output unit that outputs the digital data demodulated by the demodulation unit to an external device.

6. The apparatus according to claim 5, wherein the resonance unit includes:
a first resonance circuit that includes a first coil and a first capacitor that are serially connected with each other on a first signal line of a pair of signal lines for transmitting the digital intermediate frequency signal that is differentially output from the differential output unit to the demodulation unit; and
a second resonance circuit that includes a second coil and a second capacitor that are serially connected with each other on a second signal line of the pair of signal lines.

7. The apparatus according to claim 5, wherein the resonance unit is configured such that a capacitance of the capacitor is set in consideration of an input capacitance provided on an input terminal of the demodulation unit.

8. The apparatus according to claim 5, wherein the resonance unit further includes a resistor that adjusts a passing band level, the resistor being serially connected to the coil and the capacitor.

9. A method for receiving a broadcast signal, the method comprising:
converting a high frequency signal into a digital intermediate frequency signal;
differentially outputting the digital intermediate signal; and
supplying the digital intermediate signal that is differentially output to a digital demodulator after passing the digital intermediate frequency signal through a resonance circuit while attenuating out-of-band component of the digital intermediate frequency signal.

10. The method according to claim 9, wherein the resonance circuit includes a coil and a capacitor that are serially connected with each other.
